# EUROPEAN PATENT APPLICATION

(11) **EP 3 238 581 A1**
(43) Date of publication of application: **01.11.2017**
(21) Application number: 15873730.4
(22) Date of filing: 22.12.2015
(51) Int. Cl.: A47J 31/00, B65D 85/804, A47G 19/16

(54) **DISPOSABLE MEANS FOR PREPARING A BEVERAGE**

(30) Priority: 26.12.2014 RU 2014152918
(71) Applicant: Noniashvili, Aleksey Iljich, g. Elektrogorsk, Moscow region 142530 (RU)
(72) Inventor: GOLDBERG, Andrey Rudolfovich, g. Dolgoprudnyy Moscow region 141707 (RU)
(74) Representative: Laufhütte, Dieter
(86) International application number: PCT/RU2015/000908
(87) International publication number: WO 2016/105250

(57) **Abstract**

A disposal means for preparing a beverage from a particulate product, the means comprising a rigid base and a container to be filled with the particulate product, said container being formed of a liquid-permeable material, wherein the container has a flat mouth portion attached to the base by one part thereof, and the base being provided with at least one folding line. The base can be formed of a hard but readily flexible material such as plastic, cardboard and similar materials. The base can be provided with a holding member. The holding member can be in the form of a protrusion, a hook or an element punched from the central part of the base along an unclosed contour, such that the element can be bent away. The base can be provided with a recess. The folding line can be in the form of a crease, a weakened line, a perforated line, a partial cut, a combination thereof, or it can be obtained by another suitable method. The container can be formed of an easily compressible and liquid-permeable material such as cellulose, filter paper and other materials suitable for the proper function of the means.

## Description

The invention relates to disposable means for preparing beverages, in particular, by infusing various particulate products.

Various disposable filters, strainers, sachets are known, which can be industrially filled with a product (such as tea, coffee, herbs and the like) suitable for preparing a beverage, or can be used as containers to be filled with said product, and can have various members for manipulating with said means during preparation of the beverage and for removing residual liquid from the infused product.

Such means for preparing beverages are known from the prior art, as disclosed in patent JP4571224, int.cl. A47J 31/00, published 2010-10-27, patent CA1308927, int.cl. B65D 85/804, published 1992-10-20, GB2419805 IPC A47J 31/00, published 2006-05-10. The known means comprise a container to hold a product for preparing a beverage and a base to which said container is attached, as well as members for manipulating the means and for squeezing the residual liquid from the infused product.

The closest analog of the present invention is a disposable means for preparing a beverage, disclosed in publication JP 2006014844, IPC A47J 31/00, published 2006-01-19. The disposable means described in said publication comprises a rigid base and a container formed of a liquid-permeable material to hold a product for preparing a beverage, in particular, by infusion. However, this means has a disadvantage in that the container has been already filled with the product to be infused, and attached to the base, thus eliminating a possibility of selecting a dose of the product, and, once the beverage is prepared, the container should be removed from the beverage together with residual liquid that may leak from the container and form undesirable stains.

The object of the present invention is to provide a disposable means for preparing a beverage by a consumer, ensuring maximum convenience and reliability of use during all steps of preparing the beverage.

The term "reliability" refers to the capability of the claimed means to perform the required functions in the predetermined operations and conditions during all steps of preparing the beverage, such as:
- filling the means with a product for preparing a beverage;
- placing the means with the filled container onto a vessel;
- manipulating the means while preparing a beverage, that is, placing the means onto the vessel; lifting the means from the vessel; tilting or rotating the means; removing a mixing accessory from the vessel, and the like;
- removing the means from the container, together with squeezing the residual liquid from the infused product held in the container, just above the vessel.

Said object is achieved by the claimed disposable means for preparing a beverage from a particulate product, which means comprises a rigid base and a container to be filled with a particulate product, said container being formed of a liquid-permeable material, wherein the container has a flat mouth portion attached to the base with one part thereof, the base being provided with at least one folding line.

The base of the present means can be formed of a hard but readily flexible material, such as plastic, cardboard and similar materials.

The base of the present means can be provided with a base holding member.

The base holding member can be in the form of a protrusion, a hook or an element punched from the central part of the base along an unclosed contour such that the element can be bent away from the base.

The base of the present means can be provided with a recess.

The folding line of the base can be made in the form of a crease, a weakened line, a perforated line, a partial cut or a combination thereof, or by other appropriate method.

The present means can have a container formed of an easily compressible and liquid-permeable material such as cellulose, filter paper and other materials suitable for the proper functioning of the means.

The present invention is illustrated by the accompanying drawings, wherein:
Fig. 1 shows a general view of the means according to the present invention;
Fig. 2 shows a view of the means according to Fig. 1, when the user fills the container;
Fig. 3 shows a view of the filled means according to Fig. 1;
Fig. 4 shows a view of the means of Fig. 1 during the infusion of the beverage in the container;
Fig. 5 shows a view of the means of Fig. 1, when the content of the container is squeezed and the container is disposed of.

In the drawings:
1 - disposable means for preparing a beverage,
2 - rigid base,
3 - container,
4 - container mouth portion,
5 - base holding member,
6 - recess,
7 - folding line,
8 - part of the container mouth portion, which is attached to the base,
9 - part of the container mouth portion, which is not attached to the base.

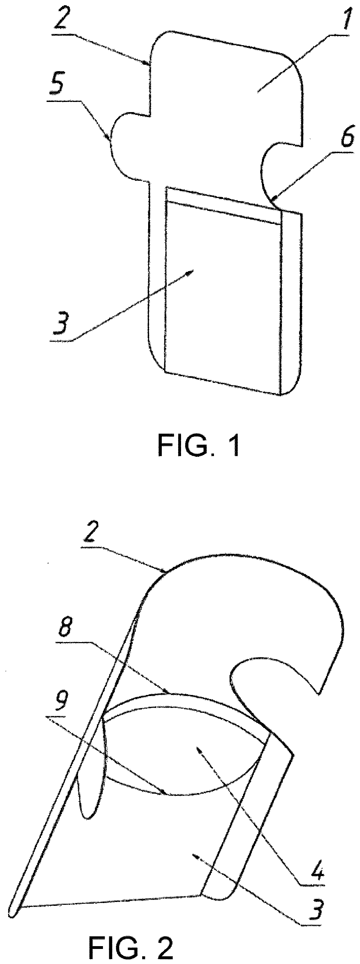

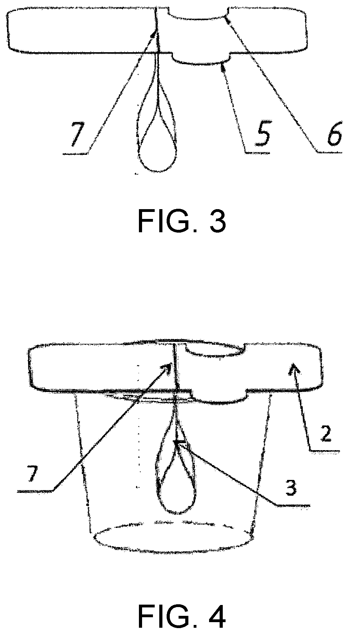

Fig. 1 provides a general view of the claimed means 1, which has a rigid base 2 formed of a hard but readily flexible material, for instance, such as plastic or cardboard or similar materials such that the base 2 could be readily bended, when it is required. The base 2 can have a single-layered or multi-layered structure having the layers which can be formed of the same material or a combination of different materials. A container 3 to be filled by the user with a particulate product before preparing a beverage such as tea, coffee, herbal infusion and the like, is attached to the base 2. The container 3 can be a sachet, a strainer, a filter or the like. The container 3 can be formed of an easily compressible and liquid-permeable material such as cellulose, filter paper and other materials suitable for the proper functioning of the means 1. The lower part of the container 3 can have different forms: rounded, rectangular, etc., to provide maximum removal of liquid from the container 3 by squeezing. The container 3 can be attached to the base 2 across or along the base. For filling the container with a particulate product, the container 3 is provided with a flat mouth portion 4 (Fig. 2). Said mouth portion 4 is formed of two parts, namely, a part 8 attached to the base 2 and an opposite part 9 which is not attached to the base 2. The base 2 can be provided with a holding member 5. The base holding member 5 allows the user to conveniently hold the means with his hand during preparation of the beverage. The base holding member 5 can be a protrusion, a hook, an element punched from the central part of the base along an unclosed contour such that the element can be bent away from the base, or any other element for convenient holding the base. Further, the base 2 can have a recess 6 for accommodating a mixing accessory such as a spoon, a stick, or a straw for drinking the beverage, and the like. The base 2 is provided with at least one folding line 7 (Fig. 3) in the form of a crease, a weakened line, a perforated line, a partial cut or a combination thereof, or obtained by another suitable method. The folding line 7 is used for folding the rigid base 2 (Fig. 4) and squeezing the container 3 for removing the residual liquid that can leak from the container 3 and make undesirable stains.

The folding line 7 is formed such that the base 2 can be placed onto the vessel for preparing the beverage without falling into the vessel, and so that the base 2 can be easily folded to squeeze the container 3.

The claimed means can be manufactured with various designs and volumes to allow preparation of the desired amount of beverage. The rigid base can have a circular, square or a different shape and can have various dimensions suitable for vessels having different volumes for preparing a beverage. The rigid base can be provided with two folding lines to allow more accurate removal of the residual liquid.

By squeezing the container 3, the user not only removes the excess liquid from the container, but also enhances the strength of the beverage, improves its taste. During squeezing, most valuable and most concentrated drops of the infusion are recovered to the beverage. Thus, squeezing the container 3 is important for obtaining a properly infused beverage. The possibility to fill a desired amount of the product for infusing, selected by the user himself, is also important for the quality, organoleptic and nutritive properties of the resulting beverage. The rigid base 2 functions at the same time as a means for easy and reliable opening/closing the container 3 when it is filled with the product to be infused, and as a cover for the vessel in which the beverage is infused, when the base 2 is subsequently placed onto the vessel for infusing. Further, the folding line 7 located on the base 2 allows its folding and then squeezing the container 3.

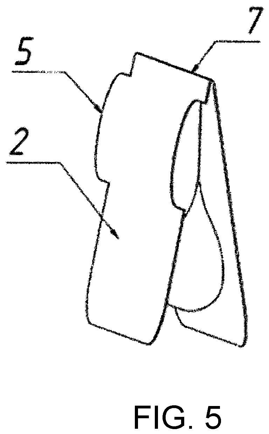

The claimed means can be used as follows. The user slightly bends the rigid base 2 by applying pressure to its longitudinal sides to flex the base slightly in the central part, such that the part 9 of the flat mouth portion 4, which is not attached to the base, slightly moves away from the base 2 and thus opens the mouth portion 4, while the attached part 8 of the mouth portion 4 remains fixed to the base 2 (Fig. 2). After that, the user fills the container with a particulate product for preparing a beverage. After filling the container 3, the user releases the pressure on the base 2, and the parts 8 and 9 are brought together, such that the mouth portion 4 becomes closed and flat, thus preventing the particulate product from spilling out of the container 3. This provides reliable holding the particulate product filled in the container 3, preventing the product to fall or spill out into the beverage. Consequently, during the preparation of the beverage, the container 3 is closed, but, when necessary, it can be readily opened without impairing the integrity of the whole means. After that, the user, while holding the disposable means 1 by the base holding member 5 with the container 3 attached to the base 2, places the means 1 in the horizontal position onto the vessel containing a liquid for preparing beverage (Fig. 3). Thus, during the preparation of the beverage, the vessel is covered by the base 2 (Fig. 4). The recess 6 allows to use a spoon or another accessory with the base 2 remaining in the horizontal position on the vessel, for uniform mixing the beverage. Once the beverage is prepared, the user lifts the rigid base 2 with the use of the holding member 5 and folds the base along the folding line 7 (Fig. 5) to squeeze the container 3 for removing the excess liquid remaining in the container, by applying pressure to the halves of the folded base 2. Thereby it is provided a reliable and accurate squeezing of the container 3 above the vessel, together with controlling the pressure of squeezing such that to prevent the drops getting outside the vessel. After that, the disposable means 1 can be disposed of.

The claimed disposable means for preparing a beverage from a particulate product allows the user to use a desired amount of product selected by the user to his preference, and to prepare the beverage at home comfortably and safely with the use of the holding member.

## Claims

1. A disposable means for preparing a beverage from a particulate product, comprising: a rigid base and a container to be filled with the particulate product, said container being formed of a liquid-permeable material, wherein the container has a flat mouth portion attached to the base by one part thereof, and the base being provided with at least one folding line.

2. The means according to claim 1, wherein the base is formed of a hard but readily flexible material such as plastic, cardboard and similar materials.

3. The means according to claim 1, wherein the base is provided with a holding member.

4. The means according to claim 3, wherein the holding member is in the form of a protrusion, a hook or an element punched from the central part of the base along an unclosed contour, such that the element can be bent away.

5. The means according to claim 1, wherein the base is provided with a recess.

6. The means according to claim 1, wherein the folding line is in the form of a crease, a weakened line, a perforated line, a partial cut, a combination thereof, or it is obtained by another suitable method.

7. The means according to claim 1, wherein the container is formed of an easily compressible and liquid-permeable material such as cellulose, filter paper and other materials suitable for the proper function of the means.
